# EUROPEAN PATENT APPLICATION

(11) **EP 2 312 520 A1**
(43) Date of publication of application: **20.04.2011**
(21) Application number: 09368040.3
(22) Date of filing: 14.10.2009
(51) Int. Cl.: G06Q 40/00

(54) **Improvements in or relating to a computer engine and associated method**

(71) Applicant: Amadeus S.A.S., 06410 Biot (FR)
(72) Inventor: Sane, Papa Birame, 06600 Antibes (FR); Hourdou, Nicholas, Imperal Court - 3804C (HK); Kotzine, Sebastien, 06200 Nice (FR)
(74) Representative: Coret, Sophie V.G.A.

(57) **Abstract**

A method of determining a financial rate associated with a particular property in respect of purchase of goods or services, the method comprising the steps of: identifying the goods or services; identifying a property associated with the identified goods or services; using a look up table to determine a financial rate associated with the property of the identified goods and services and determining one or more rules to be used in conjunction with the determined financial rate for any subsequent purpose.

## Description

### Field of the invention

The present invention relates to a computation engine and associated method for determining financial data in respect of sales of certain articles and services, particularly but not exclusively in the air ticket domain.

### Background of the invention

In the field of online transportation reservation processing, tickets are commonly purchased by users all over the world. The cost of a ticket includes various contributions, such as the price of the ticket, commission, airport taxes, and national taxes such as value added tax (VAT).

Currently the cost of a ticket is always presented as inclusive of the various contributions and it is not possible to compute, for example, VAT once the cost of the ticket has been quoted. When product tariffs are included exclusive of VAT in a fare quote system via an airline tariff publishing company (ATPCO), an additional record is attached to the stored data which describes tax computation rules. Unfortunately, these rules do not allow for retrieval of the VAT amount amongst the other contributions to the fare.

W02005/078620 discloses a method for refunding sales tax to users buying goods in one or more countries different from the resident country of the user. Each country has specific rules which apply to the calculation of tax on specific goods and in respect of other different countries. The invention provides an automated system for calculating a refund and creating a refund sheet for the user, based on the registered data relating to the goods or services. There is no disclosure of any specific rules relating to extraction of particular contributions or particular taxes. The calculations relate to a simple rule in respect of purchases carried out by the user in a country other than the resident country.

### Objects of the invention

It is an object of the present invention to overcome at least some of the problems associated with the prior art.

It is a further object of the present invention to provide a method and system for calculating VAT on any airfare or airfare related product or service price.

### Summary of the invention

The present invention provides a method and system as set out in the accompanying claims.

According to one aspect of the present invention there is provided a method of determining a financial rate associated with a particular property in respect of purchase of goods or services, the method comprising the steps of: identifying the goods or services; identifying a property associated with the identified goods or services; using a look up table to determine a financial rate associated with the property of the identified goods and services and determining one or more rules to be used in conjunction with the determined financial rate for any subsequent purpose.

### Brief description of the drawings

Reference will now be made, by way of example, to the accompanying drawings, in which:
Figure 1 is a block diagram of the architecture for the system, in accordance with an embodiment of the invention,
Figure 2 is a flow diagram of the method steps, in accordance with an embodiment of the invention,
Figure 3 is a second flow diagram of the method steps, in accordance with an embodiment of the invention,
Figure 4 is the flow diagram of the process carried out in the VAT box for rule extraction, in accordance with an embodiment of the invention.

### Detailed description of the preferred embodiments

The present invention relates to an online transportation reservation processing system and method for calculating a contribution of a price for an air or air related product or service, such as calculating value added tax (VAT). The invention provides a framework for computing the VAT value and for determining the appropriate legal text to be printed on passenger documents and the like. A set of business rules and dedicated product properties are used to provide this through a user-friendly interface.

With the present invention it is possible to compute all VAT amounts for all transportation products and services in line with the complex industry and government rules applicable in the airline environment. These rules take into consideration the different constituents of a fee for air transportation, such as taxes, services, commissions, etc. where different tax rates may apply. The invention is capable of analyzing various parameters including location, type of product, nature of the transport, and then applying the appropriate VAT rules.

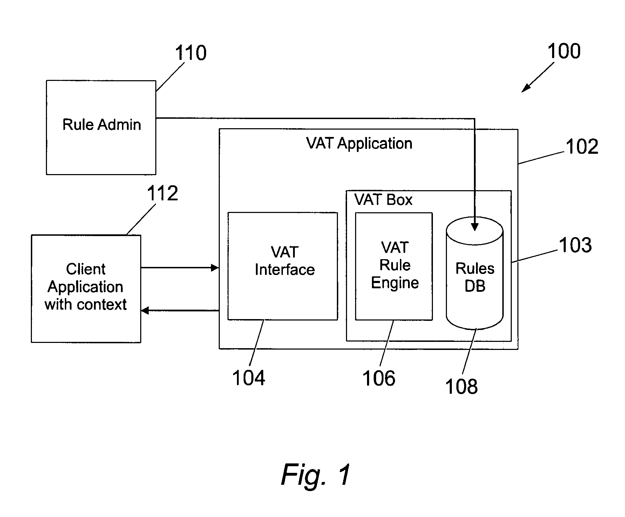

Figure 1 shows a block diagram of the architecture of the system 100. The system includes a VAT application 102 including a VAT box 103 and a VAT interface 104. The VAT box includes a VAT rule engine 106 and a rules database 108. In addition, the system also includes a rule admin client 110, and a client application with an associated and appropriate context 112. The VAT interface is the main access point to the database for providing context-full applications. The VAT interface extracts the necessary information from the passenger name record (PNR) context. The rules database includes a set of all tables which will be described in greater detail below. The rules admin client may be used to manage the rules and is provided to clients as a Graphic User Interface (GUI) application.

In the rules database four specific dedicated databases may be found and are now described in greater detail. The databases are used sequentially to compute and determine VAT amounts. Initially it is necessary to determine the main characteristics of a product on which VAT is to be applied. This is carried out in a first database. From these properties it is then possible to determine in which country VAT should be applied in a second database. A symbolic rate representation of the required VAT level is obtained. The symbol can then be used to query a third database to obtain a numeric value and carry out any necessary computation. This third database allows changes to the rate of VAT to be effected whilst the other databases do not need to be changed. This aids in the maintenance of the overall system and architecture and only one database needs to be updated when changes in VAT rates are implemented. A fourth database will carry out the rules dedicated to the legal printing of text. It will carry templates to be used to build the legal wording to be printed on a ticket, for example.

The property database is used to identify the product on which the VAT is to apply. A product may be represented by a fare component and a fare component sub-type. The fare component is one item found on the ticket or miscellaneous documents on which VAT is to be calculated. Examples include base fare, taxes, commission etc. The sub-type is product related and may affect the VAT rate that applies. For example, a code representing the tax nature or a reason for an issue of a code may qualify as sub-types. The database will determine for a given fare component and/or fare component sub-type pair the date to be considered for the VAT computation. This data may include the fare filing type (inclusive or exclusive of VAT); and the dependency of any routing. The subsequent database in the VAT application will use these properties to determine which VAT country should be considered for the computation in respect of which applicable date.

Typically, there may be a number of applicable VAT rates within a given country. The second database (a VAT symbolic rate database) is used to identify which country is applicable to VAT and which rate is to be applied. An identifier is used to qualify and differentiate base rates. The selection of which country is relevant is not always straightforward as different tax rules dictate where the VAT is relevant for a particular product in a particular country. For example, the country of routing, in case of a domestic flight, may be the relevant country. Similarly the country of service for special services may be the relevant country. In another alternative the country which is the point of sale may be that country which dictates the VAT rates. The choice of relevant country is triggered by the dependency flag which is generated as a result of the following rule:
If a fare component is tagged as being dependent on the routing, it follows that the VAT rules that apply will be those of the routing. If not the fare component will have its own VAT rate.

In certain circumstances the VAT country is known at the start, and in this case the dependency flag is not needed to find the symbolic rate. The symbolic rate will typically have a period during which it is valid so that regular updates can be made in case of changes.

The third database is a VAT numeric rate table which is used to describe the numeric rate to be applied as the VAT rate for a given country, and relative to the symbolic rate (identifier) in the second database. It is anticipated that it is only this database that need be updated to take into account changes in the VAT rate from time to time.

The fourth database is a legal text table which is used to carry the rules related to the printing of the appropriately legal text. The legal text is textual information that is required to be printed on, for example, passenger documents. The system has the ability to select which legal text shall be printed on which passenger documents according to dedicated rules. The number of times the legal text is printed is restricted and must not be printed more than once. The VAT application can send information relating to the legal text to external systems using dedicated interfaces for remote printing. Where there is more than one form of payment for a given document, different VAT amounts and associated legal texts may be prepared. Clearly where an exemption exists in VAT, generation of a text is inhibited.

The VAT interface 104 in figure 1 can be implemented using two different APIs. In the first, the application provides a simple interface to calculate VAT on eligible components for a given PNR. In this first API type of operation it is only necessary to have a PNR reference to enable the system to produce a full VAT breakdown based on each fare component. The second type of API will enable the calculation of VAT where there is no PNR. This second type of operation is referred to as context-less computation, as opposed to context-full computation in the first type. The context-less computation provides the ability to dynamically determine VAT on numerous data ranges and requires an input parameter to enable the calculation. Examples of appropriate input parameter include: dates, point-of-sale, fare component type and/or sub-type, detailed routing, VAT country, fare component, amount, etc.

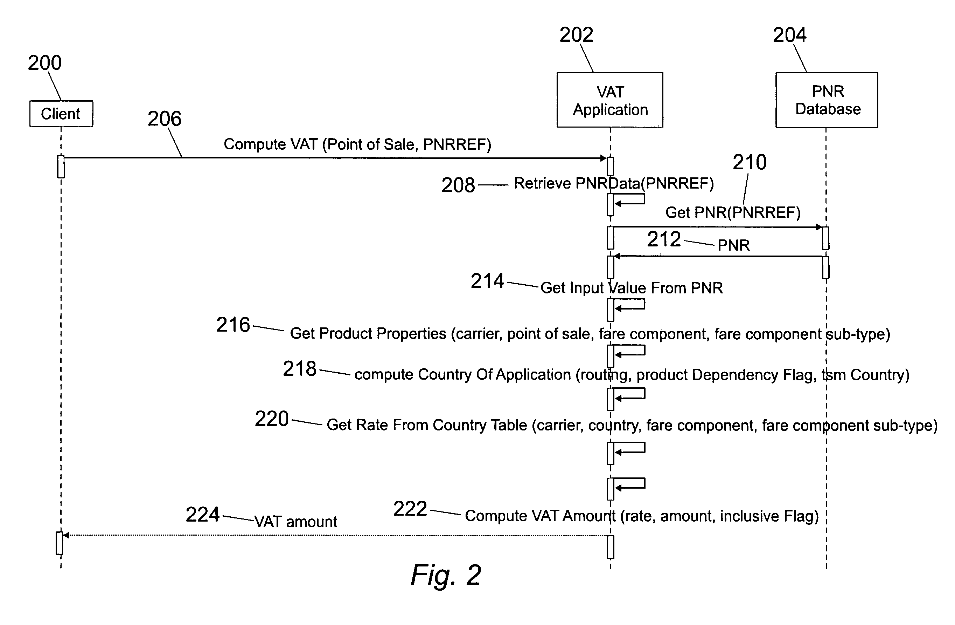

Referring to figure 2, the context-full flow associated with the first type of API will now be described. In figure 2 there are three main components, client 200, VAT application 202 and PNR Database 204. The flow proceeds as follows. The client requests a VAT computation by providing a point of sale and a PNR reference (206). In step 208 the VAT application 202 then attempts to retrieve the PNR from the PNR database 204. This is carried out by generation of a "get PNR" message in step 210. The PNR database then returns the PNR to the VAT application at step 212. The VAT application then reads the PNR information and extracts the information necessary for its purpose in step 214. This information includes fare component type and sub-type, routing, amount etc. At step 216 the VAT application accesses the properties database described above to determine if the product is dependent on the flight or not, as this will determine whether the product is linked to routing or Point-of-Sale for the purpose of VAT country. In addition, the properties database is used to determine whether the fare was inclusive or exclusive of VAT. Then, as described above with reference to the second database, at step 218 the VAT relevant country is determined. For example, the relevant country is the country of routing for a domestic flight and if the product is independent the relevant country is the Point-of-Sale. At step 220 the VAT application obtains the VAT rate from the country database based on carrier, country, fare component, fare components sub-type etc. Then at step 222 the overall VAT amount is calculated. The VAT amount is then delivered to the client in step 224.

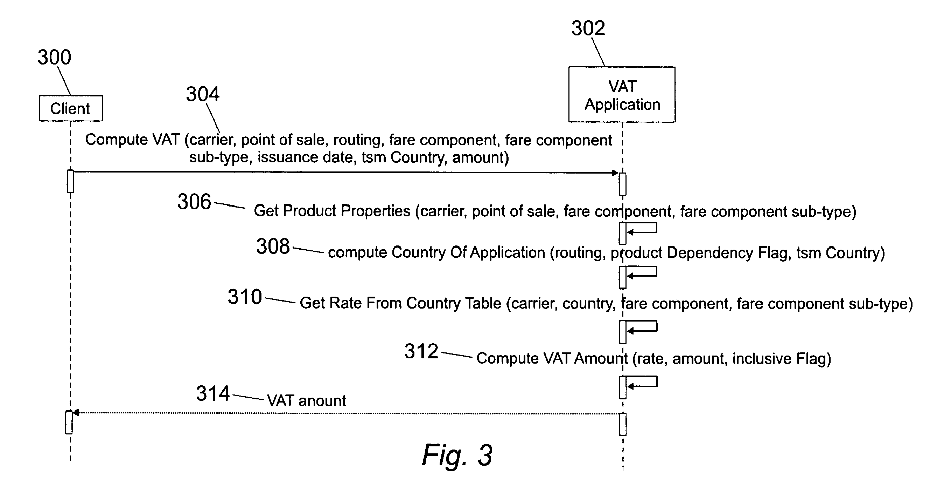

Referring to figure 3 the context-less flow will now be described. A client 300 is in communication with the VAT application 302 in order to calculate the VAT rates, or amount, based on information entered by the client. This information can include fare component type and sub-type, routing, amount etc. In a step 304 the client requests a calculation of VAT. At step 306 VAT application queries the property table of the property database to determine if the product is linked to particular routing or not. Also the date to consider for the rate retrieval is determined and whether the product is inclusive or exclusive of VAT. This information is then used to determine the VAT country that is applicable in step 308. The rate of VAT is obtained from the third database at step 310. The VAT amount is calculated at step 312 and then sent to the client in step 314.

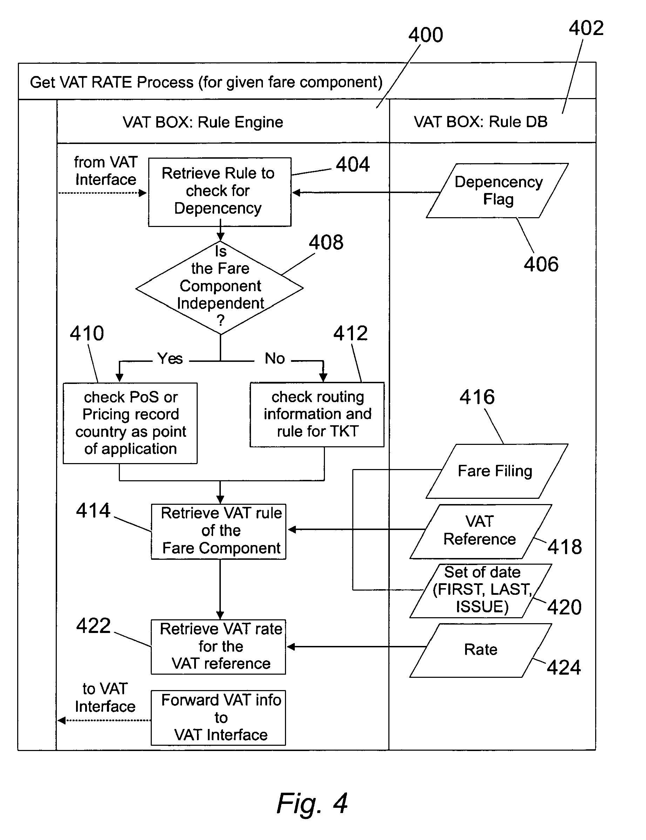

Figure 4 relates to the VAT box rule extraction that is employed in each of the above examples to obtain the VAT rate for a given fare component. The rule engine 400 and the rule database 402 operate as follows. An input is received from the VAT interface. The rule is retrieved to check for dependency at step 404 and the rule database generates a dependency flag 406 as necessary. At step 408 the rule engine determines if the fare component is independent. If yes, at step 410 the Point-of-Sale or other pricing record country is determined. If no routing information and also the ticket are checked at step 412. As a result, the VAT rules for the fare component are determined from the rule database at step 414. The rules database generates fare filling 416, VAT reference 418 and a set of dates 420 relating to first and last issue of the ticket. The rules engine then requests the VAT rate for the relevant VAT reference at step 422 and the rule database generates the rate 424. The VAT information is then forwarded to the client via the VAT interface.

The overall system may further include a GUI. This provides an interface for VAT rules management and maintenance. Parameters can be defined to enable the VAT application to apply the appropriate VAT rate. Examples of parameters include product characteristics on which VAT applies, country where VAT applies, calculation of VAT rate and legal text printing as previously described above. The complexity of the various databases is hidden from the user and the system automatically populates information in the database while the user enters only minimum information such as PNR information or other related information.

The present invention can be used in various situations, although one particular situation is likely to be calculating the VAT and deducting this from a ticket price before making a refund. The present invention has been described with reference to airline tickets, although it will be appreciated that the calculation of VAT occurs in many different domains and as such the invention is appropriate to any type of reservation, sales, purchases, or other disposal of goods or products.

The present invention has been described as containing both hardware and software modules and elements. It will be appreciated that the invention can be implemented solely in software, solely in hardware or in any combination of hardware and software modules and elements.

The description focuses on the determination of VAT; however it will be appreciated that the invention could be used to calculate different financial data which has different rates in different circumstances or properties. For example, different rates for different categories such as country, type etc.

The present invention is not limited to the specifics described above and it will be clear that there are many alternatives which fall within the scope of the invention.

## Claims

1. A method of determining a financial rate associated with a particular property in respect of purchase of goods or services, the method comprising the steps of:
- identifying the goods or services;
- identifying a property associated with the identified goods or services;
- using a look up table to determine a financial rate associated with the property of the identified goods and services;
- determining one or more rules to be used in conjunction with the determined financial rate for any subsequent purpose.

2. The method of claim 1, wherein the identifying a property step comprises identifying a relevant country associated with the goods or services.

3. The method of claim 1 or claim 2, wherein the step of using a look up table, comprising determining a taxation rate which is associated with the goods or services and the property.

4. The method of any preceding claim, wherein the step of determining one or more rules comprises determining one or more rules for providing text to be printed on any documentation associated with the goods or services.

5. The method of any preceding claim further comprising updating the look up table with new values of the financial rate.

6. The method of any preceding claim, further comprising determining Value Added Tax (VAT).

7. A system for determining a financial rate associated with a particular property in respect of purchase of goods or services, the system comprising a property identifying module for identifying a property associated with the identified goods or services; a look up table to determine a financial rate associated with the property of the identified goods and services; an output module for determining one or more rules to be used in conjunction with the determined financial rate for any subsequent purpose.

8. The system of claim 7, wherein a relevant country associated with the goods or services is identified.

9. The system of claim 7 or claim 8, wherein a look up table is used to determine a taxation rate which is associated with the goods or services and the property.

10. The system of any of claims 7 to 9, wherein one or more rules relate to one or more rules for providing text to be printed on any documentation associated with the goods or services.

11. The system of any of claims 7 to 10, wherein the financial data is value added tax.

12. A computer program comprising instructions for carrying out the steps of the method according to any one of claims 1 to 6, when said computer program is executed on a computer system.
